# EUROPEAN PATENT SPECIFICATION

(11) **EP 2 848 315 B1**
(45) Date of publication and mention of the grant of the patent: **13.12.2017**
(21) Application number: 12876344.8
(22) Date of filing: 18.10.2012
(51) Int. Cl.: B05B 1/32, F16K 17/04, F16K 27/00

(54) **EXPLOSION-PROOF SPHERICAL HEAD FOR USE AS PRESSURE RELIEF VALVE IN A SHOWER HEAD**
EXPLOSIONSGESCHÜTZTER KUGELKOPF ZUR VERWENDUNG ALS ÜBERDRUCKVENTIL IN EINEM DUSCHKOPF
TÊTE SPHÉRIQUE ANTIDÉFLAGRANTE POUR UTILISATION DE VANNE DE SURPRESSION DANS UNE DOUCHETTE

(30) Priority: 10.05.2012 CN 201210144519; 10.05.2012 CN 201220211099 U
(43) Date of publication of application: 18.03.2015
(73) Proprietor: Xiamen Solex High-Tech Industries Co., Ltd., Xiamen, Fujian 361000 (CN); Zhou, Huasong, Fujian 361000 (CN)
(72) Inventor: ZHOU, Huasong, Xiamen Fujian 361000 (CN); JI, Yangfeng, Xiamen Fujian 361000 (CN); CHEN, Jianmin, Xiamen Fujian 361000 (CN); CAO, Bin, Xiamen Fujian 361000 (CN)
(74) Representative: Verscht, Thomas Kurt Albert
(86) International application number: PCT/CN2012/083146
(87) International publication number: WO 2013/166809

(56) References cited:
- CN-A- 102 671 791
- CN-A- 102 671 791
- CN-Y- 201 339 735
- DE-A1- 4 103 193
- GB-A- 918 280
- JP-A- H0 921 473
- JP-A- S5 333 417
- JP-A- 2002 196 826
- JP-A- 2006 266 402
- TW-U- 524 143

## Description

### Field of the invention

The present invention relates to an explosion proof ball connector.

### Background of the invention

A ball connector is used in a shower head in the existing technology. If the shower head is blocked up due to water scale or other things, the pressure in the ball connector is highly increased, as the ball connector is disposed without a decompression device, when the pressure is gradually increasing, the shower head must get broken. Especially for a large area rain type shower head, a decompression device is necessary. In other cases, even with a decompression device, the structure of the decompression device is complicated and has high costs. Besides, the ball connector with the decompression device has a different size from existing ball connectors, thus making it unable to be exchanged.

GB 918 280 A describes a water-sprayer for a spin dryer for effecting a rinsing operation in the spin-dryer. The water-sprayer comprises a nozzle which forms an outlet from a supply pipe having a pressure relief valve arranged to limit the outlet pressure of the supply pipe at the nozzle by diverting part of the water supply from the nozzle if the pressure of the water in the supply pipe exceeds a certain value.

DE 41 03 193 A1 describes a safety lock as pressure monitor of a shower armature. In case of a predetermined pressure value, the safety lock is utilized to unblock an additional water path.

### Summary of the invention

The present invention provides an explosion proof ball connector, which overcomes the disadvantages of the existing technology. The technical proposal of the present invention to solve the technical problem is an explosion proof ball connector, as defined in claim 1. In a preferred embodiment, the internal wall (300) includes a bottom surface, the bottom surface is disposed with a guiding hole (230) running through the bottom surface, the guiding hole (230) faces the outlet port (120) and is connected to the inlet passage (210), the sealing element (520) is available to close the guiding hole (230).

In another preferred embodiment, the internal wall (300) is disposed with a first through hole (310) running through the internal wall (300) inside and outside, the external wall (400) is disposed with a second through hole (410) running through the external wall (400) inside and outside corresponding to the first through hole (310), the second through hole (410) is correspondingly connected to the outlet hole (130).

In another preferred embodiment, the top of the internal wall is an opening, the decompression unit (500) further includes a guiding rail (510), the guiding rail (510) is assembled at the top of the internal wall (300) for sealing the same, the elastic element (530) extends along the guiding rail (510) and between the guiding rail (510) and the sealing element (520).

In another preferred embodiment, the sealing element (520) is a ball, the elastic element (530) is a spring.

In another preferred embodiment, the valve body (200) further includes an interior water saving unit (600), the water saving unit (600) includes a water saving base (610), a water saving piece (620) and a sealing ring (630).

In another preferred embodiment, two sealing elements (700) are further disposed between the ball main body (100) and the valve body (200); two sealing elements (700) define a space in the axial direction between them, thereby forming a ring groove (430), the outlet hole (130) is in communication with the ring groove (430). In another preferred embodiment, the valve body (200) includes the longitudinal external wall (400) and the internal wall (300), which is a lateral internal wall (300). The inlet passage (210) forms between the external wall (400) and the internal wall (300). One end face of the internal wall (300) is connected to the external periphery of the external wall (400) and is connected to the outlet hole (130), another end face of the internal wall (300) is connected to the internal periphery of the external wall (400) and forms the outlet passage (220). The decompression unit (500) is assembled inside the internal wall (300).

In another preferred embodiment, another end face of the internal wall (300) is disposed with a guiding hole (230) connected to the outlet passage (220), the sealing element (520) is available to close the guiding hole (230).

In another preferred embodiment, the decompression unit includes a sealing element (520), an elastic element (530) abutting against the sealing element (520) to make the sealing element (520) closing the end of the outlet passage (220) and a nut (540); the nut (540) is assembled to the opening of the internal wall (300) for sealing the same, the nut (540) includes at least a third through hole (542) laterally running through the nut cup of the nut (540), the nut screw of the nut (540) is concaved with a lateral guiding groove (541), the sealing element (520) is slidably assembled to the guiding groove (541) with one end available to close the guiding hole (230).

In another preferred embodiment, it comprises four third through holes (542) arranged spaced annularly.

Compared to the existing technology, the technical proposal of the present invention has advantages as below:
1. The structure is disposed with a decompression unit, if the shower head is blocked up, the internal pressure of the shower head increases, the elastic element is compressed by the water pressure, so that the sealing element leaves away from the port of the outlet passage under the work of the elastic element to open the outlet passage to decompress, so as to reduce the pressure of the shower head. Thus, it protects the shower head. The structure is simple and has low costs.
2. The decompression unit is compact structural inside the valve body, so that it has the same appearance with existing ball connector of shower head, thus making it convenient to update existing ball connectors.
3. The valve body is reasonably designed. It is disposed with independent inlet passage and outlet passage inside, thus making it used with safety and reliability.

### Brief description of the drawings

The present invention will be further described with the drawings and the embodiments.
Fig. 1 illustrates a schematic diagram of an explosion proof ball connector of a first embodiment of the present invention.
Fig. 2 illustrates an exploded and sectional diagram of the explosion proof ball connector of the first embodiment.
Fig. 3 illustrates an exploded diagram of the explosion proof ball connector of the first embodiment.
Fig. 4 illustrates a first sectional diagram of a valve body of the explosion proof ball connector of the first embodiment.
Fig. 5 illustrates a second sectional diagram of the valve body of the explosion proof ball connector of the first embodiment.
Fig. 6 illustrates a first sectional diagram of the explosion proof ball connector of the first embodiment.
Fig. 7 illustrates a second sectional diagram of the explosion proof ball connector of the first embodiment.
Fig. 8 illustrates a sectional diagram of the valve body of the explosion proof ball connector of a second embodiment in normal water pressure.
Fig. 9 illustrates a sectional diagram of the valve body of the explosion proof ball connector of the second embodiment in over water pressure.
Fig. 10 illustrates a top view of the valve body of the explosion proof ball connector of the second embodiment.
Fig. 11 illustrates a side view of the valve body of the explosion proof ball connector of the second embodiment.

### Detailed description of the embodiments

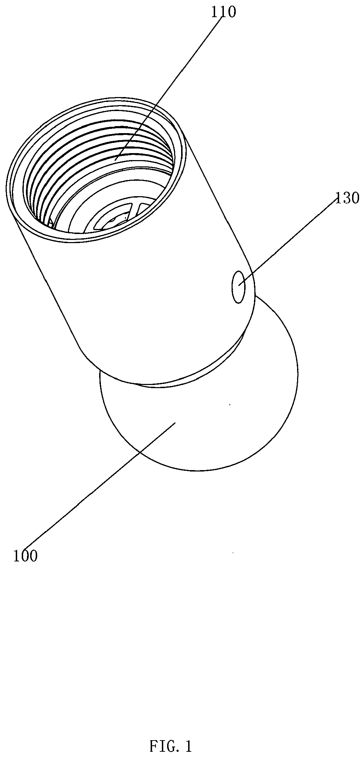

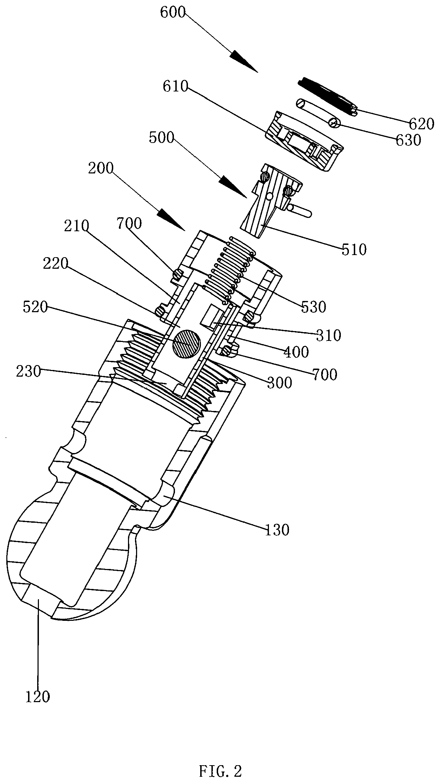

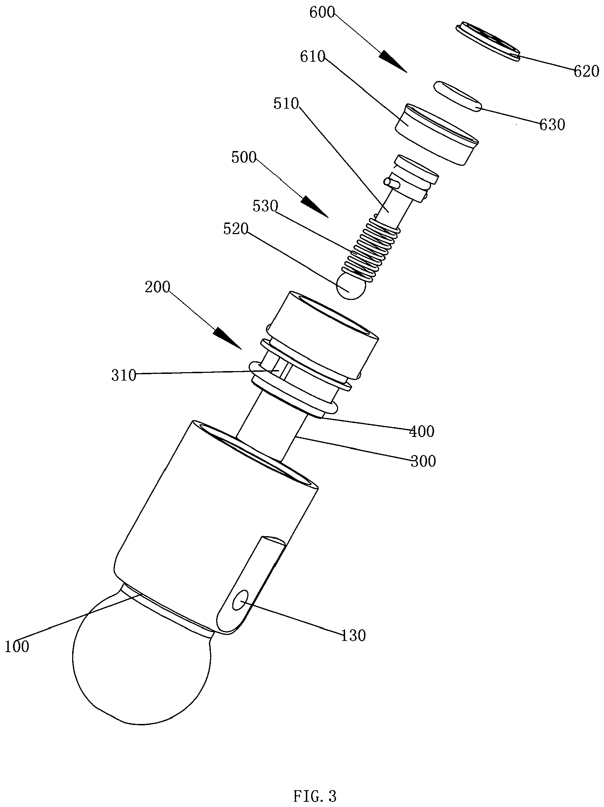

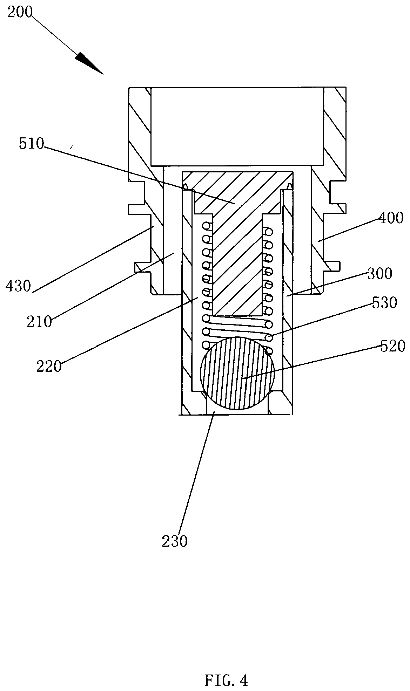

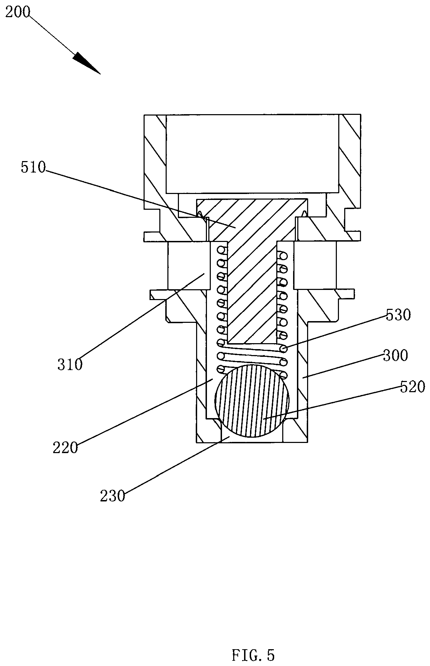

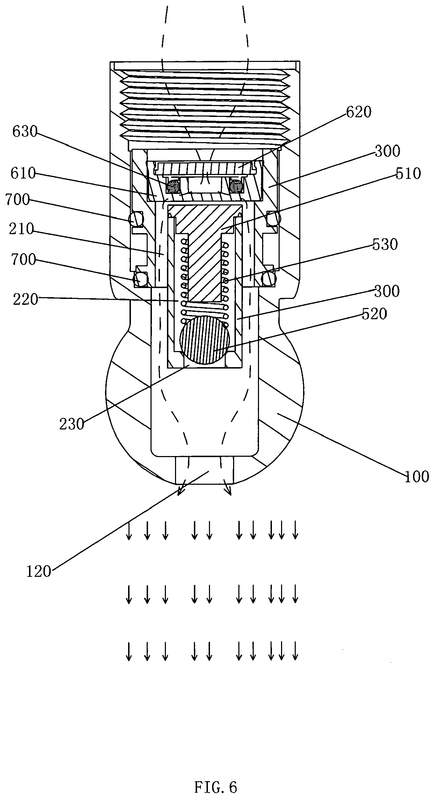

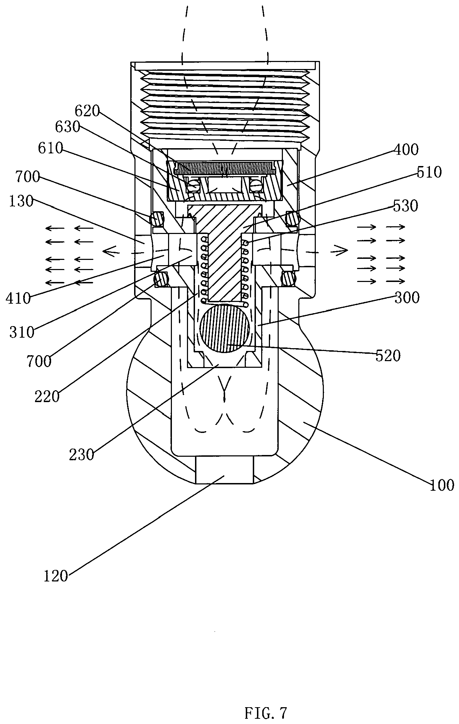

Please refer to Fig. 1 to Fig. 7, disclosed is a first preferred embodiment of an explosion proof ball connector, which comprises a ball main body 100, a valve body 200 and a decompression unit 500.

The ball main body 100 includes a waterway and an outlet hole 130 running through the waterway inside and outside, the waterway includes an inlet port 110 and an outlet port 120.

The valve body 200 includes independent an inlet passage 210 and an outlet passage 220, the valve body 200 is assembled inside the ball main body 100, the inlet passage 210 forms a part of the waterway, one end of the outlet passage 220 is connected to the outlet port 120, another end of the outlet passage 220 is connected to the outlet hole 130. The valve body 200 further includes a water saving unit 600 inside, the water saving unit 600 includes a water saving base 610, a water saving piece 620 and a sealing ring 630. In this embodiment, the valve body 200 includes a longitudinal external wall 400 and an internal wall 300 fixed to the external wall 400 codirectionally, the internal wall 300 is disposed inside the external wall 400, the inlet passage 210 forms between the internal wall 300 and the external wall 400, the outlet passage 220 forms inside the internal wall 300, the decompression unit 500 is assembled inside the internal wall 300. The internal wall 300 includes a bottom surface, the bottom surface is disposed with a guiding hole 230 running through the bottom surface, the guiding hole 230 faces to the outlet port 120 and is connected to the inlet passage 210, the sealing element 520 is available to close the guiding hole 230. Preferably, the internal wall 300 is disposed with a first through hole 310 running through the internal wall 300 inside and outside, the external wall 400 is disposed with a second through hole 410 running through the external wall 400 inside and outside corresponding to the first through hole 310, the second through hole 410 is correspondingly connected to the outlet hole 130. In this embodiment, the top of the internal wall is an opening, two sealing elements 700 are further disposed between the ball main body 100 and the valve body 200. The two sealing elements 700 have a space in the axial direction and forming a ring groove 430, the outlet hole 130 is communicated with the ring groove 430.

The decompression unit 500 is assembled inside the valve body 200 and has at least a sealing element 520 and an elastic element 530 abutting the sealing element 520 to make the sealing element 520 closing the end of the outlet passage 220. In this embodiment, the sealing element 520 is a ball, the elastic element 530 is a spring. The decompression unit 500 further includes a guiding rail 510. The guiding rail 510 is assembled at the top of the internal wall 300 in sealing way, the elastic element 530 runs through the guiding rail 510 and abuts between the guiding rail 510 and the sealing element 520.

When in normal working, the water pressure is normal, the waterway is open, water flows from the inlet port 110 to the inlet passage 210 of the valve body 200 through the water saving unit 600, then flows out of the ball main body 100 from the outlet port 120. During this condition, the sealing element 520 closes the guiding hole 230.

If the shower head is blocked up by water scale or other things, that is to say, the outlet port 120 is blocked up. The pressure inside the ball main body increases, so that the sealing element 520 of the decompression unit moves upward to leave away from the guiding hole 230 under the work of water pressure, thus opening the outlet passage, water flowing at the bottom of the ball main body 100 flows upward under the work of the water pressure and then flows into the outlet passage 220 from the guiding hole 230, and then flows out of the ball main body through the first through hole 310, the second through hole 410 and the outlet hole 130, so as to protect the shower head. After the water scale is removed, the sealing element 520 closes the guiding hole 230 again under the work of the elastic element 530, and closing the outlet passage 220, so that only the inlet passage 210 discharges water but the outlet passage 220 not.

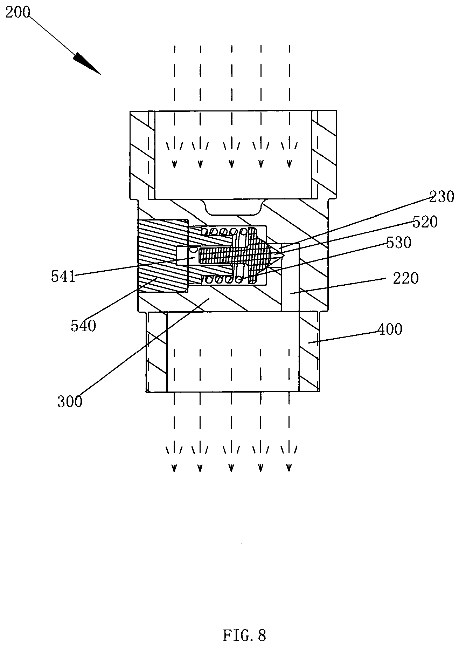

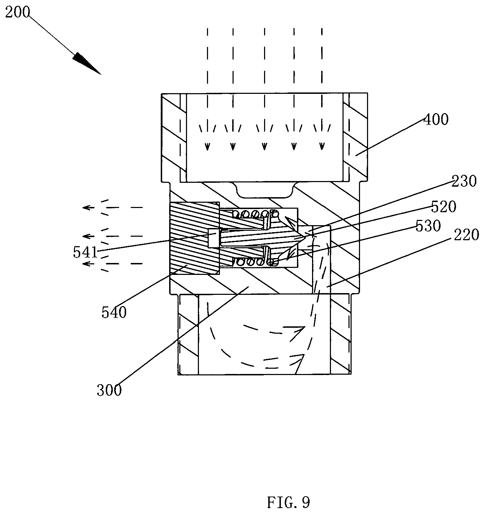

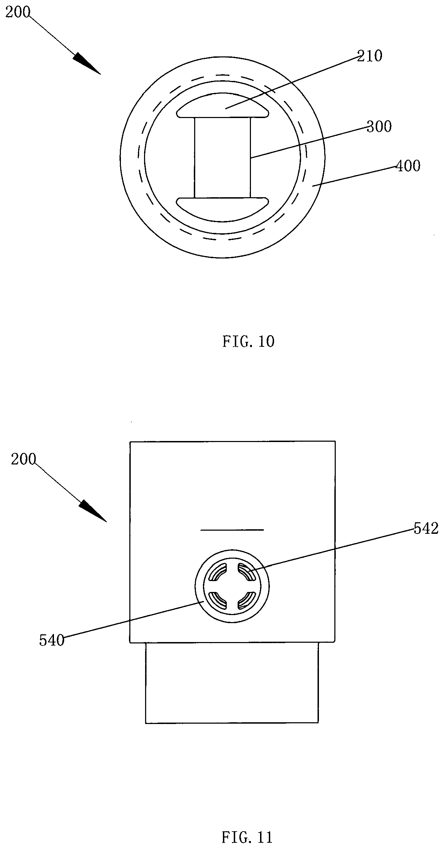

Please refer to Fig. 8 to Fig. 11, disclosed is a second preferred embodiment of an explosion proof ball connector, the difference from above embodiment is that: the valve body 200 includes a longitudinal external wall 400 and a lateral internal wall 300, the inlet passage 210 forms between the external wall 400 and the internal wall 300, one end face of the internal wall 300 is connected to the external periphery of the external wall 400 and is connected to the outlet hole 130, another end face of the internal wall 300 is connected to the internal periphery of the external wall 400 and forming the outlet passage 220, the decompression unit 500 is assembled inside the internal wall 300.

In this embodiment, another end face of the internal wall 300 is disposed with a guiding hole 230 connected to the outlet passage 220, the sealing element 520 is available to close the guiding hole 230.

In this embodiment, the decompression unit includes a sealing element 520, an elastic element 530 abutting against the sealing element 520 to make the sealing element 520 closing the end of the outlet passage 220 and a nut 540; the nut 540 is assembled to the opening of the internal wall 300 in sealing way, the nut 540 includes at least a third through hole 542 laterally running through the nut cup of the nut 540, the nut screw of the nut 540 is concaved with a lateral guiding groove 541, the sealing element 520 is slidably assembled to the guiding groove 541 with one end available to close the guiding hole 230. This embodiment comprises four third through holes 542 arranged spaced annularly.

In this embodiment, the sealing element 520 is a sealing cone.

When in normal working, the water pressure is normal, the waterway is open, water flows from the inlet port 110 to the inlet passage 210 of the valve body 200 through the water saving unit 600, then flows out of the ball main body 100 from the outlet port 120. During this condition, the sealing element 520 closes the guiding hole 230.

If the shower head is blocked up by water scale or other things, that is to say, the outlet port 120 is blocked up, the pressure inside the ball main body increases, so that the sealing element 520 of the decompression unit moves upward to leave away from the guiding hole 230 under the work of water pressure, thus opening the outlet passage, water flowing at the bottom of the ball main body 100 flows upward under the work of the water pressure and then flows into the guiding hole 230 through the outlet passage 220, and then flows out of the ball main body through the third through hole 542 and the outlet hole 130, so as to protect the shower head. After the water scale is removed, water pressure returns to normal, the sealing element 520 closes the guiding hole 230 again under the work of the elastic element 530, and closing the outlet passage 220, so that only the inlet passage 210 discharges water but the outlet passage 220 not.

Although the present invention has been described with reference to the preferred embodiments thereof for carrying out the patent for invention, it is apparent to those skilled in the art that a variety of modifications and changes may be made without departing from the scope of the patent for invention as defined by the appended claims.

### Industrial applicability

The present invention is concerned with an explosion proof ball connector, which is used in a shower head, when the shower head is blocked up, it decompresses by a decompression unit to reduce the pressure of the shower head, it thus protects the shower head; the structure is simple and has low costs with good industrial applicability.

## Claims

1. An explosion proof ball connector for use as pressure relief valve in shower head, comprising:
a ball main body (100), which includes a waterway and an outlet hole (130) running through the waterway outside and inside thereby forming a through hole, the waterway includes an inlet port (110) and an outlet port (120);
a valve body (200) with an inlet passage (210) and an outlet passage (220) being independent from the inlet passage (210), the valve body (200) being assembled inside the ball main body (100), such that the inlet passage (210) forms a part of the waterway, one end of the outlet passage (220) being connected to the outlet port (120), another end of the outlet passage (220) being connected to the outlet hole (130); the explosion proof ball connector further comprising a decompression unit (500) assembled inside the valve body (200), the decompression unit (500) including at least a sealing element (520) and an elastic element (530) abutting the sealing element (520) to make the sealing element (520) close the end of the outlet passage (220), **characterized in that** the valve body (200) includes a longitudinal external wall (400) and an internal wall (300) fixed to the external wall (400) codirectionally, wherein the internal wall (300) is disposed inside the external wall (400), the inlet passage (210) forms between the internal wall (300) and the external wall (400), the outlet passage (220) forms inside the internal wall (300) and wherein the decompression unit (500) is assembled inside the internal wall (300).

2. The explosion proof ball connector according to claim 1, wherein the internal wall (300) includes a bottom surface, the bottom surface is disposed with a guiding hole (230) running through the bottom surface, the guiding hole (230) faces the outlet port (120) and is connected to the inlet passage (210), the sealing element (520) is available to close the guiding hole (230).

3. The explosion proof ball connector according to claim 2, wherein the internal wall (300) is disposed with a first through hole (310) running through the internal wall (300) inside and outside, the external wall (400) is disposed with a second through hole (410) running through the external wall (400) inside and outside corresponding to the first through hole (310), the second through hole (410) is correspondingly connected to the outlet hole (130).

4. The explosion proof ball connector according to claim 3, wherein the top of the internal wall is an opening, the decompression unit (500) further includes a guiding rail (510), the guiding rail (510) is assembled at the top of the internal wall (300) for sealing the same, the elastic element (530) extends along the guiding rail (510) and between the guiding rail (510) and the sealing element (520).

5. The explosion proof ball connector according to claim 1 or claim 4, wherein the sealing element (520) is a ball, the elastic element (530) is a spring.

6. The explosion proof ball connector according to claim 5, wherein the valve body (200) further includes an interior water saving unit (600), the water saving unit (600) includes a water saving base (610), a water saving piece (620) and a sealing ring (630).

7. The explosion proof ball connector according to claim 1 or claim 5, wherein two sealing elements (700) are further disposed between the ball main body (100) and the valve body (200); the two sealing elements (700) define a space in the axial direction between them, thereby forming a ring groove (430), wherein the outlet hole (130) is in communication with the ring groove (430).

8. The explosion proof ball connector according to claim 1, wherein the valve body (200) includes the internal wall (300), which is a lateral internal wall (300), the inlet passage (210) forms between the external wall (400) and the internal wall (300), one end face of the internal wall (300) is connected to the external periphery of the external wall (400) and is connected to the outlet hole (130), another end face of the internal wall (300) is connected to the internal periphery of the external wall (400) and forms the outlet passage (220), the decompression unit (500) being assembled inside the internal wall (300).

9. The explosion proof ball connector according to claim 8, wherein another end face of the internal wall (300) is disposed with a guiding hole (230) connected to the outlet passage (220), the sealing element (520) is available to close the guiding hole (230).

10. The explosion proof ball connector according to claim 8, wherein the decompression unit includes a sealing element (520), an elastic element (530) abutting against the sealing element (520) to make the sealing element (520) closing the end of the outlet passage (220) and a nut (540); the nut (540) being assembled to the opening of the internal wall (300) for sealing the same, the nut (540) includes a nut cup and a nut screw and at least a third through hole (542) laterally running through the nut cup of the nut (540), wherein the nut screw of the nut (540) is concaved with a lateral guiding groove (541), the sealing element (520) being slidably assembled to the guiding groove (541) with one end available to close the guiding hole (230).

11. The explosion proof ball connector according to claim 10, comprising four third through holes (542) arranged spaced annularly.

## Patentansprüche

1. Explosionsgeschützter Kugelverbinder für die Verwendung als Überdruckventil in einem Duschkopf, der aufweist:
einen Kugelhauptkörper (100), der einen Wasserweg und ein Auslassloch (130) umfasst, das innen und außen durch den Wasserweg verläuft und dadurch ein Durchgangsloch bildet, wobei der Wasserweg eine Einlassöffnung (110) und eine Auslassöffnung (120) umfasst;
einen Ventilkörper (200) mit einem Einlassdurchgang (210) und einem Auslassdurchgang (220), der unabhängig von dem Einlassdurchgang (210) ist, wobei der Ventilkörper (200) im Inneren des Kugelhauptkörpers (100) montiert ist, so dass der Einlassdurchgang (210) einen Teil des Wasserwegs bildet, wobei ein Ende des Auslassdurchgangs (220) mit der Auslassöffnung (120) verbunden ist, ein anderes Ende des Auslassdurchgangs (220) mit dem Auslassloch (130) verbunden ist;
wobei der explosionsgeschützte Kugelverbinder ferner eine Dekompressionseinheit (500) aufweist, die im Inneren des Ventilkörpers (200) montiert ist, wobei die Dekompressionseinheit (500) wenigstens ein Dichtungselement (520) und ein elastisches Element (530), das an dem Dichtungselement (520) anliegt, umfasst, um das Dichtungselement (520) nahe an das Ende des Auslassdurchgangs (220) zu bringen,
**dadurch gekennzeichnet, dass**
der Ventilkörper (200) eine Längsaußenwand (400) und eine Innenwand (300), die an der Außenwand (400) gleich gerichtet befestigt ist, umfasst, wobei die Innenwand (300) innerhalb der Außenwand (400) angeordnet ist, der Einlassdurchgang (210) zwischen der Innenwand und der Außenwand (400) ausgebildet ist, der Auslassdurchgang (220) innerhalb der Innenwand (300) ausgebildet ist, und wobei die Dekompressionseinheit (500) innerhalb der Innenwand (300) montiert ist.

2. Explosionsgeschützter Kugelverbinder nach Anspruch 1, wobei die Innenwand (300) eine untere Oberfläche umfasst, wobei die untere Oberfläche mit einem Führungsloch (230) versehen ist, das durch die untere Oberfläche verläuft, wobei das Führungsloch (230) der Auslassöffnung (120) zugewandt ist und mit dem Einlassdurchgang (210) verbunden ist, wobei das Dichtungselement (520) zur Verfügung steht, um das Führungsloch (230) zu schließen.

3. Explosionsgeschützter Kugelverbinder nach Anspruch 2, wobei die Innenwand (300) mit einem ersten Durchgangsloch (310) versehen ist, das innen und außen durch die Innenwand (300) verläuft, die Außenwand (400) mit einem zweiten Durchgangsloch (410) versehen ist, das entsprechend dem ersten Loch (310) innen und außen durch die Außenwand (400) verläuft, wobei das zweite Loch (410) entsprechend mit dem Auslassloch (130) verbunden ist.

4. Explosionsgeschützter Kugelverbinder nach Anspruch 3, wobei die Oberseite der Innenwand eine Öffnung ist, wobei die Dekompressionseinheit (500) ferner eine Führungsschiene (510) umfasst, wobei die Führungsschiene (510) an der Oberseite der Innenwand (300) montiert ist, um dieselbe abzudichten, wobei das elastische Element (530) sich entlang der Führungsschiene (510) und zwischen der Führungsschiene (510) und dem Dichtungselement (520) erstreckt.

5. Explosionsgeschützter Kugelverbinder nach Anspruch 1 oder Anspruch 4, wobei das Dichtungselement (520) eine Kugel ist und das elastische Element (530) eine Feder ist.

6. Explosionsgeschützter Kugelverbinder nach Anspruch 5, wobei der Ventilkörper (200) ferner eine innere Wasserspareinheit (600) umfasst, wobei die Wasserspareinheit (600) ferner einen Wassersparsockel (610), einen Wassersparteil (620) und einen Dichtungsring (630) umfasst.

7. Explosionsgeschützter Kugelverbinder nach Anspruch 1 oder Anspruch 5, wobei die zwei Dichtungselemente (700) ferner zwischen dem Hauptkugelkörper (100) und dem Ventilkörper (200) angeordnet sind; wobei die zwei Dichtungselemente (700) einen Raum in der Axialrichtung zwischen einander definieren, wodurch eine Ringnut (430) ausgebildet wird, wobei das Auslassloch (130) in Verbindung mit der Ringnut (430) steht.

8. Explosionsgeschützter Kugelverbinder nach Anspruch 1, wobei der Ventilkörper (200) die Innenwand (300) umfasst, die eine seitlich innere Wand (300) ist, wobei der Einlassdurchgang (210) zwischen der Außenwand (300) und der Innenwand (300) ausgebildet ist, wobei eine Endfläche der Innenwand (300) mit dem Außenumfang der Außenwand (400) verbunden ist und mit dem Auslassloch (130) verbunden ist, wobei eine andere Endfläche der Innenwand (300) mit dem Innenumfang der Außenwand (400) verbunden ist und den Auslassdurchgang (220) bildet, wobei die Dekompressionseinheit (500) im Inneren der Innenwand (300) montiert ist.

9. Explosionsgeschützter Kugelverbinder nach Anspruch 8, wobei eine andere Endfläche der Innenwand (300) mit einem Führungsloch (230) versehen ist, das mit dem Auslassdurchgang (220) verbunden ist, wobei das Dichtungselement (520) zur Verfügung steht, um das Führungsloch (230) zu schließen.

10. Explosionsgeschützter Kugelverbinder nach Anspruch 8, wobei die Dekompressionseinheit ein Dichtungselement (520), ein elastisches Element (530), das an dem Dichtungselement (520) anliegt, um das Dichtungselement (520 das Ende des Auslassdurchgangs (220) verschließen zu lassen, und eine Mutter (540) umfasst; wobei die Mutter (540) an der Öffnung der Innenwand (300) montiert ist, um dieselbe abzudichten, wobei die Mutter (540) einen Mutterdeckel und eine Mutterschraube und wenigstens ein drittes Durchgangsloch (542), das seitlich durch den Mutterdeckel der Mutter (540) verläuft, umfasst, wobei die Mutterschraube der Mutter (540) mit einer seitlichen Führungsnut (541) ausgehöhlt ist, wobei das Dichtungselement (520) gleitend an die Führungsnut (541) montiert ist, wobei ein Ende zur Verfügung steht, um das Führungsloch (230) zu schließen.

11. Explosionsgeschützter Kugelverbinder nach Anspruch 10, der vier dritte Durchgangslöcher (542) aufweist, die ringförmig beabstandet angeordnet sind.

## Revendications

1. Raccord antidéflagrant à bille à utiliser comme soupape de surpression dans une douchette, comprenant :
un corps principal à bille (100) qui contient un passage d'eau et un trou de sortie (130) qui traverse le passage d'eau vers l'extérieur et vers l'intérieur, formant ainsi un trou traversant, le passage d'eau présentant un orifice d'entrée (110) et un orifice de sortie (120) ;
un corps de soupape (200) avec un passage d'entrée (210) et un passage de sortie (220) indépendant de celui-ci, le corps de soupape (200) étant monté à l'intérieur du corps principal à bille (100), de sorte que le passage d'entrée (210) forme une partie du passage d'eau, une extrémité du passage de sortie (220) étant reliée à l'orifice de sortie (120) tandis qu'une autre extrémité dudit passage de sortie (220) est reliée au trou de sortie (130) ; le raccord antidéflagrant à bille comprenant également une unité de décompression (500) montée à l'intérieur du corps de soupape (200), l'unité de décompression (500) contenant au moins un élément d'étanchéité (520) et un élément élastique (530) qui bute contre l'élément d'étanchéité (520) pour amener celui-ci à fermer l'extrémité du passage de sortie (220),
**caractérisé en ce que** le corps de soupape (200) comprend une paroi extérieure longitudinale (400) et une paroi intérieure (300) fixée à celle-ci de manière codirectionnelle, la paroi intérieure (300) est disposée à l'intérieur de la paroi extérieure (400), le passage d'entrée (210) est formé entre la paroi intérieure (300) et la paroi extérieure (400), le passage de sortie (220) étant formé à l'intérieur de la paroi intérieure (300), et l'unité de décompression (500) est montée à l'intérieur de la paroi intérieure (300).

2. Raccord antidéflagrant à bille selon la revendication 1, dans lequel la paroi intérieure (300) comprend une surface inférieure, la surface inférieure est pourvue d'un trou de guidage (230) qui la traverse, le trou de guidage (230) est en face de l'orifice de sortie (120) et est relié au passage d'entrée (210), l'élément d'étanchéité (520) est apte à fermer le trou de guidage (230).

3. Raccord antidéflagrant à bille selon la revendication 2, dans lequel la paroi intérieure (300) est pourvue d'un premier trou traversant (310) qui la traverse vers l'intérieur et vers l'extérieur, la paroi extérieure (400) est pourvue d'un deuxième trou traversant (410) qui la traverse vers l'intérieur et vers l'extérieur, et qui correspond au premier trou traversant (310), le deuxième trou traversant (410) est relié d'une manière correspondante au trou de sortie (130).

4. Raccord antidéflagrant à bille selon la revendication 3, dans lequel le haut de la paroi intérieure est une ouverture, l'unité de décompression (500) comprend également un rail de guidage (510), le rail de guidage (510) est monté en haut de la paroi intérieure (300) pour rendre celle-ci étanche, l'élément élastique (530) s'étend le long du rail de guidage (510) et entre celui-ci et l'élément d'étanchéité (520).

5. Raccord antidéflagrant à bille selon la revendication 1 ou la revendication 4, dans lequel l'élément d'étanchéité (520) est une bille, et l'élément élastique (530) est un ressort.

6. Raccord antidéflagrant à bille selon la revendication 5, dans lequel le corps de soupape (200) comprend une unité intérieure d'économie d'eau (600), et ladite unité d'économie d'eau (600) comprend une base d'économie d'eau (610), une pièce d'économie d'eau (620) et une bague d'étanchéité (630).

7. Raccord antidéflagrant à bille selon la revendication 1 ou la revendication 5, dans lequel deux éléments d'étanchéité (700) sont également disposés entre le corps principal à bille (100) et le corps de soupape (200) ; les deux éléments d'étanchéité (700) définissent entre eux un espace dans le sens axial, formant ainsi une rainure annulaire (430), le trou de sortie (130) communique avec la rainure annulaire (430).

8. Raccord antidéflagrant à bille selon la revendication 1, dans lequel le corps de soupape (200) comprend la paroi intérieure (300), qui est une paroi intérieure latérale (300), le passage d'entrée (210) est formé entre la paroi extérieure (400) et la paroi intérieure (300), une face d'extrémité de la paroi intérieure (300) est reliée à la périphérie extérieure de la paroi extérieure (400) et est reliée au trou de sortie (130), une autre face d'extrémité de la paroi intérieure (300) est reliée à la périphérie intérieure de la paroi extérieure (400) et forme le passage de sortie (220), l'unité de décompression (500) étant montée à l'intérieur de la pari intérieure (300).

9. Raccord antidéflagrant à bille selon la revendication 8, dans lequel une autre face d'extrémité de la paroi intérieure (300) est pourvue d'un trou de guidage (230) relié au passage de sortie (220), et l'élément d'étanchéité (520) est apte à fermer le trou de guidage (230).

10. Raccord antidéflagrant à bille selon la revendication 8, dans lequel l'unité de décompression contient un élément d'étanchéité (520), un élément élastique (530) qui bute contre l'élément d'étanchéité (520) pour amener celui-ci à fermer l'extrémité du passage de sortie (220), et un écrou (540), l'écrou (540) étant monté sur l'ouverture de la paroi intérieure (300) pour la rendre étanche, l'écrou (540) comprend une bague et un filetage et au moins un troisième trou traversant (542) qui traverse latéralement la bague de l'écrou (540), le filetage de l'écrou (540) est creusé avec une rainure de guidage (541), l'élément d'étanchéité (520) étant monté coulissant dans la rainure de guidage (541), avec une extrémité apte à fermer le trou de guidage (230).

11. Raccord antidéflagrant à bille selon la revendication 10, comprenant quatre troisièmes trous traversants (542) espacés suivant une forme annulaire.
